# EUROPÄISCHE PATENTSCHRIFT

(11) **EP 3 496 852 B1**
(45) Veröffentlichungstag und Bekanntmachung des Hinweises auf die Patenterteilung: **29.03.2023**
(21) Anmeldenummer: 17751105.2
(22) Anmeldetag: 11.08.2017
(51) Int. Cl.: B01J 29/76, B01J 29/83, B01J 29/85, B01J 29/56, B01J 29/00, B01D 53/94, B01J 35/00

(54) **SCR-AKTIVES MATERIAL**
SCR ACTIVE MATERIAL
MATERIAU SCR ACTIF

(30) Priorität: 11.08.2016 EP 16183708
(43) Veröffentlichungstag der Anmeldung: 19.06.2019
(73) Patentinhaber: Umicore AG & Co. KG, 63457 Hanau-Wolfgang (DE)
(72) Erfinder: SEYLER, Michael, 63814 Mainaschaff (DE); LENNARTZ, Michael, 60435 Frankfurt (DE); SCHUETZE, Frank-Walter, 63739 Aschaffenburg (DE); BARTH, Benjamin, 63755 Alzenau (DE); SCHULER, Anke, 63843 Niedernberg (DE); WELSCH, Frank, 63517 Rodenbach (DE); ECKHOFF, Stephan, 63755 Alzenau (DE)
(86) Internationale Anmeldenummer: PCT/EP2017/070399
(87) Internationale Veröffentlichungsnummer: WO 2018/029328

(56) Entgegenhaltungen:
- EP-A1- 2 985 068
- JP-A- 2012 215 166
- US-A1- 2015 037 233

## Beschreibung

Die vorliegende Erfindung betrifft ein SCR-aktives Material zur Verminderung von Stickoxiden im Abgas von Verbrennungsmotoren.

Abgase von Kraftfahrzeugen mit einem überwiegend mager betriebenen Verbrennungsmotor enthalten neben Partikelemissionen insbesondere die Primäremissionen Kohlenmonoxid CO, Kohlenwasserstoffe HC und Stickoxide NOx. Aufgrund des relativ hohen Sauerstoffgehaltes von bis zu 15 Vol.-% können Kohlenmonoxid und Kohlenwasserstoffe durch Oxidation relativ leicht unschädlich gemacht werden, die Reduktion der Stickoxide zu Stickstoff gestaltet sich jedoch wesentlich schwieriger.

Ein bekanntes Verfahren zur Entfernung von Stickoxiden aus Abgasen in Gegenwart von Sauerstoff ist die selektive katalytische Reduktion (SCR-Verfahren) mittels Ammoniak an einem geeigneten Katalysator. Bei diesem Verfahren werden die aus dem Abgas zu entfernenden Stickoxide mit Ammoniak zu Stickstoff und Wasser umgesetzt. Das als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Hydrolyse verfügbar gemacht werden.

Als SCR-Katalysatoren können beispielsweise bestimmte Metall-ausgetauschte Zeolithe verwendet werden. Zeolithe werden oftmals nach der Ringgröße ihrer größten Porenöffnungen in groß-, mittel- und kleinporige Zeolithe unterteilt. Großporige Zeolithe weisen eine maximale Ringgröße von 12 und mittelporige Zeolithe eine solche von 10 auf. Kleinporige Zeolithe weisen eine maximale Ringgröße von 8 auf.

Während beispielsweise im Bereich Schwerlastkraftwagen in großem Umfang SCR-Katalysatoren auf Basis von Eisen-ausgetauschten β-Zeolithen, also eines großporigen Zeolithen, verwendet wurden und immer noch werden, gewinnen SCR-Katalysatoren auf Basis kleinporiger Zeolithe zunehmend an Bedeutung, siehe beispielsweise WO2008/106519 A1, WO2008/118434 A1 und WO2008/132452 A2. Dabei standen zuletzt insbesondere SCR-Katalysatoren auf Kupfer-Chabazit-Basis im Fokus.

Die bekannten SCR-Katalysatoren vermögen zwar Stickoxide mit hoher Selektivität mit Ammoniak als Reduktionsmittel zu Stickstoff und Wasser umzusetzen. Ab etwa 350°C setzt jedoch bei Kupfer-Chabazit basierten Katalysatoren die sogenannte parasitäre Ammoniakoxidation ein und tritt in Konkurrenz zur erwünschten SCR-Reaktion. Hierbei wird das Reduktionsmittel Ammoniak in einer Reihe von Nebenreaktionen mit Sauerstoff zu Distickstoff, Lachgas, Stickstoffmonoxid oder Stickstoffdioxid umgesetzt, so dass entweder das Reduktionsmittel nicht effektiv genutzt wird oder sich sogar aus dem Ammoniak zusätzliche Mengen an Stickoxiden bilden. Besonders ausgeprägt ist diese Konkurrenz bei hohen Reaktionstemperaturen im Bereich von 500 bis 650°C, wie sie bei der Regeneration von Dieselpartikelfiltern (DPF) im Abgasstrang am SCR-Katalysator auftreten können. Des Weiteren muss sichergestellt sein, dass die Katalysatormaterialien alterungsstabil sind, um auch über die gesamte Lebensdauer eines Kraftfahrzeugs hohe Schadstoff-Umsätze erzielen zu können. Um auch bei den Reaktionstemperaturen während einer DPF-Regeneration und über die Lebensdauer hohe Umsätze zu erreichen, besteht also Bedarf an verbesserten SCR-Katalysator-Materialien.

Die WO2008/132452 A2 beschreibt einen mit zum Beispiel Kupfer ausgetauschten kleinporigen Zeolithen, welcher als Washcoat auf ein passendes monolithisches Substrat beschichtet bzw. zu einem Substrat extrudiert werden kann. Der Washcoat kann einen Binder enthalten, welcher ausgewählt ist aus der Gruppe bestehend aus Aluminiumoxid, Siliziumoxid, (nicht zeolithisches) Siliziumoxid-Aluminiumoxid, natürliche Tonerden, TiO₂, ZrO₂ und SnO₂.

Die WO2013/060341 A1 beschreibt SCR-aktive Katalysatorkompositionen aus einer physikalischen Mischung eines sauren Zeolithen oder Zeotypen in protonischer Form oder in mit Eisen promotierter Form mit beispielsweise Cu/Al₂O₃.

ACS Catal. 2012, 2, 1432-1440 beschreibt Reaktionswege von Ammoniak auf CuO/_{γ}-Al₂O₃ während NH₃-SCR-Reaktionen. Während mit 0,5 Gew.-% CuO/_{γ}-Al₂O₃ Ammoniak insbesondere mit Stickstoffmonoxid reagierte um Stickstoff zu bilden, reagiert es mit 10 Gew.-% CuO/_{γ}-Al₂O₃ insbesondere mit Sauerstoff unter Bildung von Stickoxiden.

JP2012-215166 beschreibt ein Verfahren, bei dem ein Zeolith vom Typ SAPO mit Böhmit vermischt und aus dieser Mischung ein zylindrischer Wabenkörper extrudiert wird, der anschließend in eine Kupfernitrat-Lösung getaucht wird.

Die EP 2 985 068 A1 offenbart ein Katalysatorsystem zur Reduktion von Stickoxiden, das einen Stickoxidspeicherkatalysator und einen SCR-Katalysator umfasst, wobei der Stickoxid-Speicherkatalysator aus mindestens zwei katalytisch aktiven Washcoatschichten auf einem Tragkörper besteht, wobei eine untere Washcoatschicht A Ceroxid, eine Erdalkaliverbindung und/oder Alkaliverbindung, sowie Platin und Palladium enthält und eine obere Washcoatschicht B, die über der Washcoatschicht A angeordnet ist, Ceroxid, Platin und Palladium und keine Alkali- und Erdalkaliverbindung enthält, sowie ein Verfahren zur Konvertierung von NOx in Abgasen von Kraftfahrzeugen, die mit mager betriebenen Motoren, betrieben werden. Der SCR-Katalysator umfasst einen kupferausgetauschten Chabazit sowie Aluminiumoxid. Auf dem Aluminiumoxid befindet sich kein Kupferoxid.

Die US 2015/037233 A1 offenbart einen Ammoniakschlupfkatalysator, der in einer oberen oder stromaufwärts gelegenen Schicht Palladium zur Oxidation von Kohlenstoffmonoxid und/oder Kohlenwasserstoffen aufweist.

Des Weiteren weist der Ammoniakschlupfkatalysator entweder in der oberen Schicht oder in einer unteren oder stromabwärts gelegenen Schicht einen SCR-Katalysator auf. In einer unteren Schicht befindet sich ein Ammoniakoxidationskatalysator. Beim Trägermaterial für Palladium und/oder beim SCR-Katalysator kann es sich um einen Zeolithen handeln. Aluminiumoxid kann Bestandteil der verschiedenen Katalysatorschichten sein. Der Zeolith wird mit Kupfer beladen. Kupfer befindet sich jedoch nicht auf dem Aluminiumoxid.

Es wurde nun überraschend gefunden, dass bestimmte SCR-Materialien auf Basis eines kleinporigen Zeolithen, Aluminiumoxid und Kupfer die oben genannten Anforderungen erfüllen.

Die vorliegende Erfindung betrifft ein SCR-aktives Material, das einen
(i) kleinporigen Zeolithen,
(ii) Aluminiumoxid und
(iii) Kupfer umfasst,
dadurch gekennzeichnet, dass es bezogen auf das gesamte Material 5 bis 25 Gew.-% Aluminiumoxid enthält und das Kupfer auf dem Aluminiumoxid in einer ersten Konzentration und auf dem kleinporigen Zeolithen in einer zweiten Konzentration vorliegt.

Der Wortlaut, wonach Kupfer auf dem Zeolithen vorliegt, umfasst im Rahmen der vorliegenden Erfindung das Vorliegen von Kupfer als Teil des Gittergerüstes des Zeolithen, das Vorliegen von Kupfer in Ionenausgetauschter Form in Poren des Zeolithgerüstes, sowie jede andere Form, in der Kupfer innerhalb des dreidimensionalen Zeolithgerüstes oder auf dessen Oberfläche gebunden sein kann.

Ebenso umfasst der Wortlaut, wonach Kupfer auf dem Aluminiumoxid vorliegt, alle Formen in denen Kupfer innerhalb des dreidimensionalen Aluminiumoxidgerüstes oder auf dessen Oberfläche gebunden sein kann. Dies schließt auch Mischoxide ein, wie z.B. Kupferaluminat (CuAl₂O₄).

Der Begriff Kupfer umfasst in jedem Fall sowohl metallisches Kupfer, als auch Kupfer in Ionenform, als auch Kupferoxid.

Ferner umfasst im Rahmen der vorliegenden Erfindung der Begriff "Aluminiumoxid" nicht den Anteil an Aluminiumoxid im Zeolithgitter des Zeolithen. "Aluminiumoxid" umfasst also nur die Komponente gemäß (ii) und nicht den Anteil an Aluminiumoxid, welcher sich aus dem SiO₂/Al₂O₃ Verhältnis (SAR) des Zeolithen ergibt.

Die Gesamtmenge an Kupfer, berechnet als CuO und bezogen auf das gesamte SCR-aktive Material beträgt insbesondere 1 bis 15 Gew.-%, bevorzugt 1 bis 10 Gew.-% und besonders bevorzugt 2 bis 5 Gew.-%.

Hierbei ist zu berücksichtigen, dass die bevorzugte Menge an Kupfer im Verhältnis zum Zeolithen abhängig ist vom SiO₂/Al₂O₃-Verhältnis des Zeolithen. Im Allgemeinen gilt, dass mit zunehmenden SiO₂/Al₂O₃-Verhältnis des Zeolithen die Menge an austauschbarem Kupfer abnimmt. Das bevorzugte Atomverhältnis von im Zeolithen eingetauschten Kupfer zu Gerüst-Aluminium im Zeolithen, nachfolgend als Cu/Al-Verhältnis bezeichnet, liegt erfindungsgemäß insbesondere bei 0,25 bis 0,6.

Dies entspricht einem theoretischen Austauschgrad des Kupfers mit dem Zeolithen von 50% bis 120%, ausgehend von einem vollständigen Ladungsausgleich im Zeolithen durch zweiwertige Cu-Ionen bei einem Eintauschgrad von 100%. Besonders bevorzugt sind Cu/Al-Werte von 0,35-0,5, was einem theoretischen Cu-Austauschgrad von 70-100% entspricht.

Das Cu/Al-Verhältnis ist eine weit verbreitete Größe zur Charakterisierung von mit Kupfer ausgetauschten Zeolithen, siehe zum Beispiel WO2008/106519 A1, Catalysis Today 54 (1999) 407-418 (Torre-Abreu et. al), Chem. Commun., 2011, 47, 800-802 (Korhonen et al.) oder ChemCatChem 2014, 6, 634-639 (Guo et al.). Der Fachmann ist somit mit dieser Größe vertraut.

Das Cu/Al-Verhältnis kann zum Beispiel mittels optischer Emissionsspektrometrie mit induktiv gekoppeltem Plasma (ICP-OES) bestimmt werden. Diese Methode ist dem Fachmann bekannt

Es ist besonders vorteilhaft, wenn die erste Konzentration (die Konzentration des Kupfers auf dem Aluminiumoxid) höher ist als die zweite Konzentration (die Konzentration des Kupfers auf dem Zeolithen). Bevorzugt ist die erste Konzentration mindestens 1,5 Mal, besonders bevorzugt mindestens 3 Mal, höher als die zweite Konzentration. Beispielsweise ist die erste Konzentration 1,5 bis 20 Mal oder 3 bis 15 Mal höher als die zweite Konzentration.

Das Verhältnis der ersten und zweiten Konzentration kann mit Hilfe von Transmissionselektronenspektroskope (TEM) und energiedispersiver Röntgenspektroskopie (EDX) bestimmt werden. Hierzu wird ein Dünnschnitt des erfindungsgemäßen SCR-aktiven Materials angefertigt und mit Hilfe der EDX die Konzentration an Kupfer in Bereichen des Zeolithen und in Bereichen des Aluminiumoxids ermittelt und ins Verhältnis gesetzt. Dieses Verfahren ist dem Fachmann bekannt und in der Literatur beschrieben.

In einer Ausführungsform ist das erfindungsgemäße SCR-aktive Material frei von Edelmetallen wie zum Beispiel Platin, Palladium und Rhodium.

Die kleinporigen Zeolithe sind beispielsweise Aluminosilikate. Alle dem Fachmann bekannten Zeolithe dieser Art können verwendet werden. Dazu gehören natürlich vorkommende, bevorzugt aber synthetisch hergestellte kleinporige Zeolithe.

Beispiele für synthetisch hergestellte kleinporige Zeolithe gehören den Strukturtypen ABW, ACO, AEI, AEN, AFN, AFT, AFX, ANA, APC, APD, ATN, ATT, ATV, AWO, AWW, BIK, BRE, CAS, CDO CHA, DDR, DFT, EAB, EDI, EPI, ERI, ESV, GIS, GOO, IHW, ITE, ITW, JBW, KFI, LEV, LTA, LTJ, MER, MON, MTF, NSI, OWE, PAU, PHI, RHO, RTE, RTH, SAS, SAT, SAV, SIV, THO, TSC, UEI, UFI, VNI, YUG und ZON an.

Bevorzugte kleinporige Zeolithe sind solche, die den Strukturtypen AEI, CHA (Chabazit), ERI (Erionit), LEV (Levyne), AFX, DDR und KFI bzw. solche, die den Strukturtypen AEI, CHA (Chabazit), ERI (Erionit), AFX, DDR und KFI angehören. Besonders bevorzugt sind die Strukturtypen CHA, AEI, ERI und LEV bzw. die Strukturtypen CHA, AEI und ERI. Ganz besonders bevorzugt sind die Strukturtypen CHA und LEV bzw. CHA.

In Ausführungsformen der vorliegenden Erfindung weisen die kleinporigen Zeolithe vom Aluminosilikat-Typ einen SAR-Wert von 5 bis 50 auf, bevorzugt von 14 bis 40, besonders bevorzugt zwischen 20 und 35.

Im Rahmen der vorliegenden Erfindung fallen unter den Begriff Zeolith nicht nur die oben beschriebenen Aluminosilikate, sondern auch sogenannte Zeolith-ähnliche Materialien vom Typ der Silicoaluminophosphate und Aluminophosphate. Geeignete Silicoaluminophosphate bzw. Aluminophosphate gehören insbesondere ebenfalls den Strukturtypen AEI, CHA (Chabazit), ERI (Erionit), LEV (Levyne), AFX, DDR und KFI an. Solche Materialien können unter dem entsprechenden Three-Letter-Code der Structure Database der International Zeolite Association unter Related Materials entnommen werden (http://www.iza-structure.org/databases/). Beispiele sind SAPO-17, SAPO-18, SAPO-34, SAPO-35, SAPO-39, SAPO-43, SAPO-47 und SAPO-56 bzw. AIPO-17, AIPO-18, AIPO-34 und AIPO-35. Für diese Materialien sind die oben erwähnten bevorzugten SAR Werte von Aluminosilikaten nicht zutreffend.

Die mittlere Kristallitgröße (d₅₀) des kleinporigen Zeolithen beträgt beispielsweise 0,1 bis 20 µm, bevorzugt 0,5-10 µm, besonders bevorzugt 1-4 µm.

Als Aluminiumoxid kommt insbesondere Aluminiumoxid mit einer BET-Oberfläche von 30 bis 250 m²/g, bevorzugt von 100 bis 200 m²/g (bestimmt nach ISO 9277) in Frage. Solche Materialien sind dem Fachmann bekannt und am Markt erhältlich.

Daneben kommen Aluminiumoxide in Frage, die mit weiteren Elementen dotiert sind, um die physikalischen bzw. chemischen Eigenschaften zu verbessern. Bekannte Elemente sind beispielsweise Si, Mg, Y, La und Elemente der Lanthanide, wie z.B. Ce, Pr, Nd, die mit dem Aluminium Mischoxidverbindungen eingehen können und so beispielsweise die Acidität bzw. Oberflächenstabilität verändern können. Die Dotierung des Aluminiumoxids mit einem oder mehreren Elementen sollte kleiner 15 Gew.- % betragen bezogen auf das jeweilige Mischoxid, bevorzugt kleiner 10 Gew.-%, besonders bevorzugt kleiner 5 Gew.-%.

Die Aluminiumoxide können als solche verwendet werden, wobei es aber bevorzugt ist, das Aluminiumoxid im Rahmen der Herstellung des SCR-aktiven Materials aus einer geeigneten Vorstufe, wie z.B. einem Boehmit oder einem Aluminiumsalz, wie z.B. Aluminiumnitrat, zu bilden.

In einer Ausführungsform der vorliegenden Erfindung liegt das SCR-aktive Material in einer Form vor, bei der der kleinporige Zeolith einen Kern und das Aluminiumoxid eine diesen Kern umhüllende Schale bildet. Solche Strukturen sind als Core-Shell-Strukturen bekannt und beispielsweise in WO2012/117042 A2 beschrieben.

In einer Ausführungsform der vorliegenden Erfindung liegt das SCR-aktive Material als Pulver vor.

In einer anderen Ausführungsform der vorliegenden Erfindung liegt das SCR-aktive Material in Form einer Beschichtungssuspension vor, die
a) ein SCR-aktives Material, das einen
   (i) kleinporigen Zeolithen,
   (ii) Aluminiumoxid und
   (iii) Kupfer umfasst,
   wobei es bezogen auf das gesamte Material 5 bis 25 Gew.-% Aluminiumoxid enthält und das Kupfer auf dem Aluminiumoxid in einer ersten Konzentration und auf dem kleinporigen Zeolithen in einer zweiten Konzentration vorliegt und
b) Wasser
   umfasst.

In einer Ausführungsform enthält die erfindungsgemäße Beschichtungssuspension 20 bis 55 Gew.-% des SCR-aktiven Materials und 45 bis 80 Gew.-% Wasser, jeweils bezogen auf das Gewicht der Beschichtungssuspension.

In einer anderen Ausführungsform enthält die erfindungsgemäße Beschichtungssuspension 30 bis 50 Gew.-% des SCR-aktiven Materials und 50 bis 70 Gew.-% Wasser, jeweils bezogen auf das Gewicht der Beschichtungssuspension.

Das erfindungsgemäße SCR-aktive Material kann zum Beispiel dadurch hergestellt werden, dass eine wässrige Suspension aus kleinporigem Zeolith, Kupfersalz und Aluminiumoxid bzw. einer Vorläuferverbindung von Aluminiumoxid getrocknet und anschließend kalziniert wird.

Beispielsweise wird ein kleinporiger Zeolith in Wasser vorgelegt, unter Rühren ein lösliches Kupfersalz zugegeben und anschließend das Aluminiumoxid oder eine entsprechende Aluminiumoxid-Vorstufe dazugegeben. Die so erhaltene Suspension des erfindungsgemäßen SCR-aktiven Materials in Wasser kann direkt als Beschichtungssuspension verwendet werden. Sie kann aber auch filtriert und/oder getrocknet werden, wobei im letzgenannten Fall das erfindungsgemäße SCR-aktive Material in Pulverform erhalten wird.

Ebenso ist es beispielsweise möglich, nach der Trockung und Kalzinierung der wässrige Suspension aus dem kleinporigen Zeolithen, dem Aluminiumoxid bzw. der Aluminiumoxidvorläuferverbindung und des Kupfersalzes, das erhaltene Material erneut mit Aluminiumoxid oder einer entsprechende Aluminiumoxid-Vorstufe in wässriger Lösung zu suspendieren, erneut zu trocknen und zu kalzinieren und so das erfindungsgemäße SCR-aktive Material in Pulverform herzustellen.

Aus dem SCR-aktiven Material in Pulverform kann die erfindungsgemäße Beschichtungssuspension in einfacher Weise durch Zugabe von Wasser unter Rühren und gegebenenfalls Mahlen erhalten werden.

Bevorzugte lösliche Kupfersalze sind Salze, die in Wasser löslich sind wie z.B. Kupfersulfat, Kupfernitrat und Kupferacetat. Besonders bevorzugt sind Kupfernitrat und Kupferacetat, ganz besonders bevorzugt Kupferacetat.

Die Art der Trocknung kann nach unterschiedlichen Verfahren erfolgen. So sind dem Fachmann Sprühtrocknung, Mikrowellentrocknung, Bandtrocknung, Walzentrocknung, Kondensationstrocknung, Trommeltrocknung, Gefriertrocknung und Vakuumtrocknung bekannt. Bevorzugt sind Sprühtrocknung, Bandtrocknung, Walzentrocknung und Gefriertrocknung. Besonders bevorzugt ist die Sprühtrocknung. Dabei wird mittels eines Zerstäubers die Suspension in einen Heißgasstrom eingebracht, der es in sehr kurzer Zeit (wenige Sekunden bis Bruchteilen einer Sekunde) zu dem SCR-aktiven Material trocknet. Gegebenenfalls wird das Material anschließend zum Beispiel bei Temperaturen von 500°C - 900°C in Luft oder einem Luft/Wassergemisch kalziniert. Bevorzugt erfolgt die Kalzinierung bei Temperaturen zwischen 550°C - 850°C, ganz besonders bevorzugt bei 600°C -750°C.

In einer weiteren Ausführungsform der vorliegenden Erfindung ist es beispielsweise möglich, nach dem Waschen und der Trocknung und gegebenenfalls Kalzinierung der wässrige Suspension aus dem kleinporigen Zeolithen und des Kupfersalzes (bzw. einen bereits mit Kupfer synthetisierten Zeolithen), das so erhaltene Material anschließend mit Aluminiumoxid oder einer entsprechende Aluminiumoxid-Vorstufe in wässriger Lösung zu suspendieren, erneut zu trocknen und zu kalzinieren und so das erfindungsgemäße SCR-aktive Material herzustellen. Dieses Material kann anschließend erneut in Wasser suspendiert, gegebenenfalls gemahlen, mit Binder versehen und beschichtet werden.

Als Binder zur Beschichtung von Durchflusssubstraten können beispielsweise Al₂O₃, SiO₂, TiO₂ oder ZrO₂ bzw. deren Vorstufen, ebenso wie deren Mischungen verwendet werden. Üblicher Weise werden bei der Beschichtung von Filtersubstraten keine Binder benötigt.

Zu Zwecken der Klarheit sei hier darauf verwiesen, dass sich das Aluminiumoxid bzw. die Aluminiumoxidvorstufe zur Herstellung des erfindungsgemäßen SCR-aktiven Materials dadurch von aluminiumhaltigen Bindermaterialien unterscheidet, dass es:
1. bereits bei der Herstellung des SCR-aktiven Materials eingesetzt wird und nicht erst zur Verbesserung der Haftfestigkeit des katalytisch aktiven Materials auf einem Durchflusssubstrat
2. Ein Teil des Kupfers auf dem Aluminiumoxid vorliegt
3. Das SCR-aktive Material, welches das Aluminiumoxid bzw. die Aluminiumoxidvorstufe enthält, kalziniert wird, bevor es auf ein Substrat beschichtet wird, wodurch die typischen Bindereigenschaften verloren gehen.
4. Das Aluminiumoxid auch zur Herstellung des erfindungsgemäßen SCR-aktiven Materials eingesetzt wird, wenn die porösen Wände eines Filtersubstrate beschichtet werden sollen (z.B. bei einer in-Wand-Beschichtung eines Wandflussfilters), um die thermische Stabilität des katalytisch aktiven Materials zu erhöhen. Der Einsatz eines Binders ist in diesem Fall nicht notwendig, da die Bindereigenschaften des Binders nicht benötigt werden, wenn das katalytisch aktive Material in den Poren des Filters sitzt. Der zusätzlich zugefügte Binder würde ferner zu einer unerwünschten Erhöhung des Gegendrucks über dem Filter führen, wenn ansonsten die Menge des beschichteten katalytisch aktiven Materials gleich bleiben würde.
5. Zur Erhöhung des NOx Umsatzes nach thermischer Alterung des erfindungsgemäßen SCR-aktiven Materials beiträgt und nicht als katalytisch inaktiv gilt.

Dabei kann das erfindungsgemäße SCR-aktive Material einen oder mehrere bzw. alle der oben genannten Punkte erfüllen

In Ausführungsformen der vorliegenden Erfindung liegt das erfindungsgemäße SCR-aktive Material in Form einer Beschichtung auf einem Trägersubstrat vor.

Trägersubstrate können sogenannte Durchflusssubstrate oder auch Wandflussfilter sein. Sie können beispielsweise aus Silicium-Carbid, AluminiumTitanat, Cordierit oder Metall bestehen. Sie sind dem Fachmann bekannt und am Markt erhältlich.

Das Aufbringen des erfindungsgemäßen SCR-aktiven Materials auf das Trägersubstrat kann nach dem Fachmann geläufigen Methoden erfolgen, so etwa nach den üblichen Tauchbeschichtungsverfahren bzw. Pump- und Saug-Beschichtungsverfahren mit sich anschließender thermischer Nachbehandlung (Kalzination).

Dem Fachmann ist bekannt, dass im Falle von Wandflussfiltern dessen durchschnittliche Porengröße und die mittlere Teilchengröße des erfindungsgemäßen SCR-aktiven Materials so aufeinander abgestimmt werden können, dass die resultierende Beschichtung auf den porösen Wänden, die die Kanäle des Wandflussfilters bilden, liegt (auf-Wand-Beschichtung). Bevorzugt werden aber durchschnittliche Porengröße und mittlere Teilchengröße so aufeinander abgestimmt, dass sich das erfindungsgemäße SCR-aktive Material in den porösen Wänden, die die Kanäle des Wandflussfilters bilden, befindet, dass also eine Beschichtung der inneren Porenoberflächen erfolgt (in-Wand-Beschichtung). In diesem Fall muss die mittlere Teilchengröße des erfindungsgemäßen SCR-aktiven Materials klein genug sein, um in die Poren des Wandflussfilters einzudringen.

Die vorliegende Erfindung betrifft auch Ausführungsformen, in denen das SCR-aktive Material mittels einer Matrixkomponente zu einem Substrat extrudiert wurde. Das Trägersubstrat wird in diesem Fall aus einer inerten Matrixkomponente und dem erfindungsgemäßen SCR-aktiven Material gebildet.

Trägersubstrate, Durchflusssubstrate ebenso wie Wandflussfilter, die nicht nur aus inertem Material, wie beispielsweise Cordierit bestehen, sondern die daneben auch ein katalytisch aktives Material enthalten, sind dem Fachmann bekannt. Zu ihrer Herstellung wird eine Mischung aus beispielsweise 10 bis 95 Gew.-% inerter Matrixkomponente und 5 bis 90 Gew.-% katalytisch aktiven Materials nach an sich bekannten Verfahren extrudiert. Als Matrixkomponenten können dabei alle auch sonst zur Herstellung von Katalysatorsubstraten verwendeten inerten Materialien verwendet werden. Es handelt sich dabei beispielsweise um Silikate, Oxide, Nitride oder Carbide, wobei insbesondere Magnesium-Aluminium-Silikate bevorzugt sind.

Die extrudierten Trägersubstrate, die erfindungsgemäßes SCR-aktives Material umfassen, können als solche zur Abgasreinigung verwendet werden. Sie können aber auch wie inerte Trägersubstrate auch nach üblichen Verfahren mit weiteren katalytisch aktiven Materialien beschichtet werden.

Das erfindungsgemäße SCR-aktive Material liegt aber bevorzugt nicht als Extrudat vor, insbesondere nicht als Extrudat, das ausschließlich aus dem erfindungsgemäßen SCR-aktive Material besteht, das heißt, das keine Matrixkomponente enthält.

Das erfindungsgemäße SCR-aktive Material kann mit Vorteil zur Reinigung von Abgas von mager betriebenen Verbrennungsmotoren, insbesondere von Dieselmotoren, verwendet werden. Es setzt im Abgas enthaltene Stickoxide in die unschädlichen Verbindungen Stickstoff und Wasser um.

Die vorliegende Erfindung betrifft demnach auch ein Verfahren zur Reinigung von Abgas von mager betriebenen Verbrennungsmotoren, das dadurch gekennzeichnet ist, dass das Abgas über ein erfindungsgemäßes SCR-aktives Material geleitet wird.

In der Regel geschieht diese Überleitung in Gegenwart eines Reduktionsmittels. Als Reduktionsmittel wird bei dem erfindungsgemäßen Verfahren bevorzugt Ammoniak verwendet. Der benötigte Ammoniak kann beispielsweise im Abgassystem anströmseitig zum erfindungsgemäßen Partikelfilter etwa mittels eines anströmseitigen Stickoxidspeicherkatalysators ("lean NOx trap - LNT) gebildet werden, insbesondere im Betrieb unter fetten (rich) Abgasbedingungen. Dieses Verfahren ist als "passive SCR" bekannt.

Ammoniak kann aber auch im "active SCR-Verfahren" in Form wässriger Harnstofflösung mitgeführt werden, die bedarfsgerecht über einen Injektor anströmseitig zum erfindungsgemäßen Partikelfilter eindosiert wird.

Die vorliegende Erfindung betrifft somit auch eine Vorrichtung zur Reinigung von Abgas von mager betriebenen Verbrennungsmotoren, die dadurch gekennzeichnet ist, dass sie ein erfindungsgemäßes SCR-aktives Material, bevorzugt in Form einer Beschichtung auf einem inerten Trägermaterial, sowie ein Mittel zur Bereitstellung eines Reduktionsmittels umfasst.

In der Regel wird als Reduktionsmittel Ammoniak verwendet. In einer Ausführungsform der erfindungsgemäßen Vorrichtung ist das Mittel zur Bereitstellung eines Reduktionsmittels somit ein Injektor für wässrige Harnstofflösung. Der Injektor wird in der Regel mit wässrige Harnstofflösung gespeist, die aus einem mitgeführten Reservoir, also zum Beispiel einem Tankbehälter stammt.

In einer anderen Ausführungsform ist das Mittel zur Bereitstellung eines Reduktionsmittels ein Stickoxidspeicher-Katalysator, der in der Lage ist, aus Stickoxid Ammoniak zu bilden. Solche Stickoxidspeicher-Katalysatoren sind dem Fachmann bekannt und in der Literatur umfassend beschrieben. Beispielsweise aus SAE-2001-01-3625 ist bekannt, dass die SCR-Reaktion mit Ammoniak schneller verläuft, wenn die Stickoxide in einer 1:1 Mischung aus Stickstoffmonoxid und Stickstoffdioxid vorliegen oder jedenfalls diesem Verhältnis nahekommen. Da das Abgas von mager betriebenen Verbrennungsmotoren in der Regel einen Überschuss von Stickstoffmonoxid gegenüber Stickstoffdioxid aufweist, schlägt das Dokument vor, den Anteil an Stickstoffdioxid mit Hilfe eines Oxidationskatalysators zu erhöhen.

In einer Ausführungsform umfasst die erfindungsgemäße Vorrichtung somit auch einen Oxidationskatalysator. In Ausführungsformen der vorliegenden Erfindung wird als Oxidationskatalysator Platin auf einem Trägermaterial verwendet.

Als Trägermaterial für das Platin kommen alle dem Fachmann für diesen Zweck geläufigen Materialien in Betracht. Sie weisen eine BET-Oberfläche von 30 bis 250 m²/g, bevorzugt von 100 bis 200 m²/g auf (bestimmt nach ISO9277) und sind insbesondere Aluminiumoxid, Siliziumoxid, Magnesiumoxid, Titanoxid, Zirkonoxid, Ceroxid sowie Mischungen oder Mischoxide aus mindestens zwei dieser Oxide.

Bevorzugt sind Aluminiumoxid und Aluminium/Silizium-Mischoxide. Sofern Aluminiumoxid verwendet wird, so ist es besonders bevorzugt stabilisiert, beispielsweise mit Lanthanoxid.

Die erfindungsgemäße Vorrichtung ist beispielsweise so aufgebaut, dass in Strömungsrichtung des Abgases zuerst der Oxidationskatalysator, dann der Injektor für wässrige Harnstofflösung und dann das erfindungsgemäße SCR-aktive Material, bevorzugt in Form einer Beschichtung auf einem inerten Trägermaterial, angeordnet sind.

Alternativ sind in Strömungsrichtung des Abgases zuerst ein Stickoxidspeicher-Katalysator und dann das erfindungsgemäße SCR-aktive Material, bevorzugt in Form einer Beschichtung auf einem inerten Trägermaterial, angeordnet. Bei der Regeneration des Stickoxidspeicher-Katalysators kann unter reduktiven Abgasbedingungen Ammoniak gebildet werden. Oxidationskatalysator und Injektor für wässrige Harnstofflösung sind in diesem Fall entbehrlich.

Das erfindungsgemäße SCR-aktive Material weist in überraschender Weise Vorteile im Vergleich zu herkömmlichen Kupfer-ausgetauschten kleinporigen Zeolithen auf. Insbesondere zeichnet es sich durch höhere Stickoxidumsätze bei Reaktionstemperaturen zwischen 500 und 650°C aus.

Die Erfindung wird in den nachstehenden Beispielen und Figuren näher erläutert.

### Beispiel 1

### a) Präparation eines erfindungsgemäßen Materials EM-1

100,4 Gramm Kupfer(II)-acetat-1-hydrat und 960 Gramm Ammoniumchabazit mit einem SiO₂/Al₂O₃-Verhältnis von 30 werden in 2500 Gramm Wasser aufgeschlämmt. Die erhaltene Suspension wird für 2 Stunden gerührt. Anschließend werden 400 Gramm eines Boehmit-Sols mit einem Gehalt von 20 Gewichtsprozent Al₂O₃ zugesetzt. Danach wird wieder für 2 Stunden gerührt.

Die fertige Suspension wird in einem Sprühtrockner in ein trockenes Pulver überführt, welches anschließend für 2 Stunden bei 500°C unter Luft kalziniert wird.

### b) Charakterisierung der Cu-Verteilung von EM-1 zwischen Zeolith und Aluminiumoxid

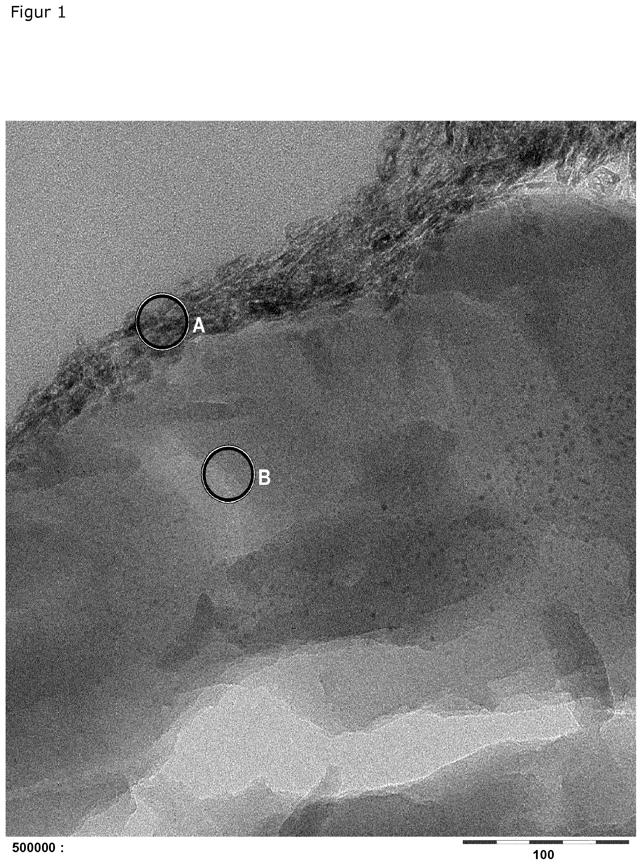

Das gemäß Schritt a) erhaltene Material EM-1 wird fein verteilt in ein Polymerharz eingebettet. Dann werden Dünnschnitt-Proben angefertigt und im Transmissionselektronenmikroskop untersucht. Ein beispielhaftes TEM-Bild des Materials ist in Abbildung 1 dargestellt. Die Bereiche des Aluminiumoxid und des Zeolithen können anhand des per EDX bestimmten Aluminium-Gehalts und anhand der Morphologie deutlich unterschieden werden. Es zeigt einen Ausschnitt eines Zeolithkristalliten mit einer Hülle aus Aluminiumoxid. In der Aufnahme wurden 2 Bereiche markiert, um die Unterschiede zwischen den Aluminiumoxidbereichen (Bereich A) und dem Zeolithbereich (Bereich B) darzustellen. An diesen beiden Stellen wurde die Kupfer-Konzentration in Gewichtsprozent per EDX bestimmt und die in Bereich A bestimmte Konzentration durch die in Bereich B bestimmte Konzentration dividiert.

Analog wurde diese Prozedur an weiteren TEM-Aufnahmen von ZeolithKristalliten mit Aluminiumoxid-Hülle durchgeführt, um eine statistische Auswertung zu ermöglichen. In allen Fällen wurde festgestellt, dass die Konzentration an Kupfer im Bereich der Aluminiumoxidhülle deutlich höher war als auf dem Zeolithen, wie der folgenden Tabelle entnommen werden kann.

| | Konzentration Cu auf dem Al₂O₃ [Gew%] geteilt durch Konzentration Cu auf dem Zeolithen [Gew%] gemäß TEM/EDX |
|---|---|
| Probe 1 | 8,7 |
| Probe 2 | 3,2 |
| Probe 3 | 4,8 |

### Vergleichsbeispiel 1

### Präparation eines Vergleichsmaterials VM-1

100,4 Gramm Kupfer(II)-acetat-1-hydrat und 960 Gramm Ammoniumchabazit mit einem SiO₂/Al₂O₃-Verhältnis von 30 werden in 2500 Gramm Wasser aufgeschlämmt. Die erhaltene Suspension wird für 2 Stunden gerührt. Abweichend von Beispiel 1 wird kein Boehmit-Sol hinzugesetzt. Die fertige Suspension wird in einem Sprühtrockner in ein trockenes Pulver überführt, welches für 2 Stunden bei 500°C unter Luft kalziniert wird.

Die eingesetzte Kupfermenge bei dieser Präparation, bezogen auf den Zeolithen, ist somit gleich groß wie in Beispiel 1. Allerdings liegt kein zusätzliches Al₂O₃ in dem Material vor, auf welchem sich Kupfer verteilen kann.

### Vergleich der katalytischen Aktivität von EM-1 und VM-1

Die SCR-Aktivität des EM-1-Materials und des VM-1-Materials wird an einem Pulverreaktor überprüft. Hierzu werden je 200 mg des entsprechenden Materials in einen U-Rohr-Reaktor aus Quarzglas eingefüllt und mit Quarzwolle fixiert.

Es wird jeweils der Stickoxidumsatz bei einer Reaktionstemperatur von 450°C unter folgenden Messbedingungen bestimmt: 500 ppm Stickstoffmonoxid, 750 ppm Ammoniak, 5% Wasser, 5% Sauerstoff, Rest Stickstoff, Fluss mL/min.

Das EM-1-Material liefert 96 % NOx-Umsatz, das VM-1-Material hingegen nur 89% NOx-Umsatz.

### Beispiel 2

### Präparation eines beschichteten Wabenkörpers WEM-1 mit dem EM-1 Material

950 Gramm des EM-1-Materials und 250 Gramm eines Boehmit-Sols mit einem Gehalt von 20 Gewichtsprozent Al₂O₃ werden mit Wasser zu einer Suspension angesetzt. Das hinzugegebene Boehmit-Sol dient als Bindersystem, um eine gute Haftung des EM-1-Materials auf einem handelsüblichen Wabenkörper aus Cordierit zu erzielen.

Die erhaltene Suspension enthält somit gemäß Ansatz folgende Verbindungen bzw. Komponenten gemäß Einwaage und Berechnung von Kupfer als CuO:

| Verbindungen/Komponente | Herkunft | Anteil | |
|---|---|---|---|
| CuO | ex EM-1-Pulver | 3,5 Gew% | |
| Zeolith | ex EM-1-Pulver | 84,5 Gew% | |
| Aluminiumoxid | ex EM-1-Pulver | 7,0 Gew% | Summe 12,0 Gew% |
| Aluminiumoxid | ex Bindersystem | 5,0 Gew% | |

Über ein gängiges Tauchverfahren wird ein Cordieritwabenkörper (5,66 Zoll Durchmesser, 3 Zoll Länge, 400 cpsi Zelligkeit und 6 mil Wandstärke) mit einer Washcoatbeladung von 150 g/L Katalysatorvolumen beschichtet, bei 90°C getrocknet und bei 500°C getempert.

### Vergleichsbeispiel 2

### Präparation eines beschichteten Wabenkörpers WVM-1 mit dem VM-1 Material

880 Gramm des VM-1-Materials und 600 Gramm eines Boehmit-Sols mit einem Gehalt von 20 Gewichtsprozent Al₂O₃ werden mit Wasser zu einer Suspension angesetzt. Über ein gängiges Tauchverfahren wird ein Cordieritwabenkörper (5,66 Zoll Durchmesser, 3 Zoll Länge, 400 cpsi Zelligkeit und 6 mil Wandstärke) mit einer Washcoatbeladung von 150 g/L Katalysatorvolumen beschichtet, bei 90°C getrocknet und bei 500°C getempert.

Die erhaltene Suspension enthält somit gemäß Ansatz anteilig dieselben Mengen an folgenden Komponenten wie Beispiel 2, wobei abweichend von Beispiel 2, diesmal die Aluminiumoxidkomponente ausschließlich aus dem Binder stammt.

| Komponente | Herkunft | Anteil |
|---|---|---|
| CuO | ex EM-1-Pulver | 3,5 Gew% |
| Zeolith | ex EM-1-Pulver | 84,5 Gew% |
| Aluminiumoxid | ex Binder | 12,0 Gew% |

### Vergleich der katalytischen Aktivität von WEM-1 und WVM-1

### a) In frischem Zustand

Aus den beiden Wabenkörpern WEM-1 und WVM-1 wurde jeweils ein Bohrkern mit 1 Zoll Durchmesser und 3 Zoll Länge ausgebohrt und in einer Modellgasanlage auf ihre katalytische Aktivität getestet.

Folgende Messbedingung wurde ausgewählt: 500 ppm NO, 750 ppm NH₃, 5 Vol.-% H₂O, 10 Vol.-% O₂, Rest N₂ mit einer Raumgeschwindigkeit von 60000 h-1 bei Reaktionstemperaturen von 500 °C und 650 °C.

WEM-1 weist bei beiden Messtemperaturen gegenüber WVM-1 höhere NOx-Umsätze auf.

| | Reaktionstemperatur | |
|---|---|---|
| | 500°C | 650°C |
| WEM-1 | 97% NOx-Umsatz | 58% NOx-Umsatz |
| WVM-1 | 95%-NOx-Umsatz | 54 % NOx-Umsatz |

### b) Nach Alterung

Die beiden Bohrkerne aus WEM-1 und WVM-1 wurden für 16 Stunden bei 750°C in einem Gasgemisch aus 10 Vol.-% Wasser, 10 Vol.-% Sauerstoff und 80 Vol.-% Stickstoff behandelt, um eine Alterung der Katalysatoren im Fahrbetrieb zu simulieren.

Nach dieser simulierten Alterung wird wieder die katalytische Aktivität unter den oben unter a) angegebenen Bedingungen getestet. Der auf dem erfindungsgemäßen Material EM-1 basierende Katalysator WEM-1 weist deutlich höhere NOx-Umsätze auf als der Vergleichskatalysator WVM-1.

| | Reaktionstemperatur | |
|---|---|---|
| | 500°C | 650°C |
| WEM-1 | 85% NOx-Umsatz | 43% NOx-Umsatz |
| WVM-1 | 82%-NOx-Umsatz | 28 %NOx-Umsatz |

### Beispiel 3

Das erfindungsgemäße Material EM-1 wird mit einer Washcoatbeladung von 100 g/L als In-Wand-Beschichtung auf ein Siliciumcarbid-Filtersubstrat beschichtet. Man erhält den beschichteten Filter FEM-1.

### Vergleichsbeispiel 3

Analog zu Beispiel 3 wird ein Siliciumcarbid-Filtersubstrat mit dem Vergleichsmaterial VEM-1 beschichtet. Man erhält den beschichteten Filter FVM-1

### Vergleich der katalytischen Aktivität von FEM-1 und FVM-1

Aus beiden beschichteten Filtern gemäß Beispiel 3 und Vergleichsbeispiel 3 wird jeweils ein Bohrkern entnommen. Diese werden für 16 Stunden bei 800°C in einem Gasgemisch aus 10 Vol.-% Wasser, 10 Vol.-% Sauerstoff und 80 Vol.% Stickstoff behandelt, um die harte Alterung eines mit einem SCR-aktiven Material beschichteten Partikelfilters im Fahrbetrieb zu simulieren.

Anschließend werden beide Bohrkerne am Modellgas unter folgender Messbedingung vermessen: 500 ppm NO, 750 ppm NH₃, 5 Vol.-% H₂O, 10 Vol.-% O₂, Rest N₂ mit einer Raumgeschwindigkeit von 100000 h-1 bei einer Reaktionstemperatur von 650 °C.

Während FVM-1 nur einen NOx-Umsatz von 8% erreicht, setzt die FEM-1-Probe 18% der dosierten Stickoxide um.

## Patentansprüche

1. SCR-aktives Material, das einen
i. kleinporigen Zeolithen,
ii. Aluminiumoxid und
iii. Kupfer umfasst,
**dadurch gekennzeichnet, dass** es bezogen auf das gesamte Material 5 bis 25 Gew.-% Aluminiumoxid enthält und das Kupfer auf dem Aluminiumoxid in einer ersten Konzentration und auf dem kleinporigen Zeolithen in einer zweiten Konzentration vorliegt, und dass die Gesamtmenge an Kupfer, berechnet als CuO und bezogen auf das gesamte SCR-aktive Material 1 bis 15 Gew.-% beträgt, und dass die erste Konzentration höher ist als die zweite Konzentration, und das der kleinporige Zeolith einen Kern und das Aluminiumoxide eine diesen Kern umhüllende Schale bildet.

2. SCR-aktives Material gemäß Anspruch 1, **dadurch gekennzeichnet, dass** die erste Konzentration mindestens 1,5 Mal höher ist als die zweite Konzentration.

3. SCR-aktives Material gemäß Anspruch 1 und/oder 2, **dadurch gekennzeichnet, dass** das Atomverhältnis vom im Zeolithen eingetauschtem Kupfer zu Gerüstaluminium im Zeolithen bei 0,25-0,6 liegt.

4. SCR-aktives Material gemäß einem oder mehreren der Ansprüche 1 bis 3, **dadurch gekennzeichnet, dass** der kleinporige Zeolith ein Aluminosilikat ist und dem Strukturtyp AEI, CHA (Chabazit), ERI (Erionit), LEV (Levyne), AFX, DDR oder KFI angehört.

5. SCR-aktives Material gemäß Anspruch 4, **dadurch gekennzeichnet, dass** der kleinporige Zeolith einen SAR-Wert von 5 bis 50 aufweist.

6. SCR-aktives Material gemäß einem oder mehreren der Ansprüche 1 bis 3, **dadurch gekennzeichnet, dass** der kleinporige Zeolith ein Silicoaluminophospat oder ein Aluminophosphat ist und dem Strukturtyp AEI, CHA (Chabazit), ERI (Erionit), LEV (Levyne), AFX, DDR oder KFI angehört.

7. SCR-aktives Material gemäß einem oder mehreren der Ansprüche 1 bis 6, **dadurch gekennzeichnet, dass** die mittlere Kristallitgröße (d50) des kleinporigen Zeolithen 0,1 bis 20 µm beträgt.

8. SCR-aktives Material gemäß einem oder mehreren der Ansprüche 1 bis 7, **dadurch gekennzeichnet, dass** es in Pulverform vorliegt.

9. SCR-aktives Material gemäß einem oder mehreren der Ansprüche 1 bis 10, **dadurch gekennzeichnet, dass** es in Form einer Beschichtung auf einem Trägersubstrat vorliegt oder dass es mittels einer Matrixkomponente zu einem Substrat extrudiert wurde, wobei das Trägersubstrat im Fall des Extrudierens aus einer inerten Matrixkomponente und dem SCR-aktiven Material gebildet wird.

10. SCR-aktives Material gemäß einem oder mehreren der Ansprüche 1 bis 7, **dadurch gekennzeichnet, dass** es in Form einer Beschichtungssuspension vorliegt, die
a) ein SCR-aktives Material, das einen
(i) kleinporigen Zeolithen,
(ii) Aluminiumoxid und
(iii) Kupfer umfasst,
wobei es bezogen auf das gesamte Material 5 bis 25 Gew.-% Aluminiumoxid enthält und das Kupfer auf dem Aluminiumoxid in einer ersten Konzentration und auf dem kleinporigen Zeolithen in einer zweiten Konzentration vorliegt, und dass die Gesamtmenge an Kupfer, berechnet als CuO und bezogen auf das gesamte SCR-aktive Material 1 bis 15 Gew.- % beträgt, und dass die erste Konzentration höher ist als die zweite Konzentration, und das der kleinporige Zeolith einen Kern und das Aluminiumoxide eine diesen Kern umhüllende Schale bildet, und
b) Wasser
umfasst.

11. Verfahren zur Reinigung von Abgas von mager betriebenen Verbrennungsmotoren, **dadurch gekennzeichnet, dass** das Abgas über ein SCR-aktives Material gemäß einem oder mehreren der Ansprüche 1 bis 9 geleitet wird.

12. Vorrichtung zur Reinigung von Abgas von mager betriebenen Verbrennungsmotoren, **dadurch gekennzeichnet ist, dass** es ein SCR-aktives Material gemäß einem oder mehreren der Ansprüche 1 bis 9, sowie ein Mittel zur Bereitstellung eines Reduktionsmittel umfasst.

13. Vorrichtung gemäß Anspruch 12, **dadurch gekennzeichnet, dass** das Mittel zur Bereitstellung eines Reduktionsmittels ein Injektor für wässrige Harnstofflösung ist.

14. Vorrichtung gemäß einem der Ansprüche 12 bis 13, **dadurch gekennzeichnet, dass** sie einen Oxidationskatalysator umfasst.

15. Vorrichtung gemäß Anspruch 12, **dadurch gekennzeichnet, dass** das Mittel zur Bereitstellung eines Reduktionsmittels ein Stickoxid-Speicherkatalysator ist.

16. Verfahren zur Herstellung des SCR-aktiven Materials gemäß einem oder mehreren der Ansprüche 1 bis 8, **dadurch gekennzeichnet, dass** ein kleinporiger Zeolith in Wasser vorgelegt, unter Rühren ein lösliches Kupfersalz zugegeben und anschließend das Aluminiumoxid oder eine entsprechende Aluminiumoxid-Vorstufe zugegeben wird.

17. Verfahren nach Anspruch 16, **dadurch gekennzeichnet, dass** die durch nach Vorlegen des kleinporigen Zeolithen in Wasser, Zugabe eines löslichen Kupfersalzes unter Rühren und anschließende Zugabe des Aluminiumoxids oder einer entsprechenden Aluminiumoxid-Vorstufe erhaltene Suspension anschließend filtriert und/oder getrocknet wird.

18. Verfahren nach Anspruch 17, **dadurch gekennzeichnet, dass** es sich bei der Trocknung um Sprühtrocknung handelt.

19. Verfahren gemäß Anspruch 17 und/oder 18, **dadurch gekennzeichnet, dass** die Kalzinierung in Luft oder in einer Luft/Wasser Atmosphäre bei Temperaturen zwischen 500°C und 900°C stattfindet.

## Claims

1. SCR-active material comprising
i. a small-pore zeolite,
ii. aluminum oxide and
iii. copper,
**characterized in that** it contains 5 to 25 wt.% aluminum oxide, based on the total material, and the copper is present on the aluminum oxide in a first concentration and on the small-pore zeolite in a second concentration, and **in that** the total amount of copper, calculated as CuD and based on the total SCR-active material, is 1 to 15 wt.%, and **in that** the first concentration is higher than the second concentration, and **in that** the small-pore zeolite forms a core and the aluminum oxide forms a shell enclosing this core.

2. SCR-active material according to claim 1, **characterized in that** the first concentration is at least 1.5 times higher than the second concentration.

3. SCR-active material according to claim 1 and/or claim 2, **characterized in that** the atomic ratio of copper to backbone aluminum submerged in the zeolite is 0.25-0.6 in the zeolite.

4. SCR-active material according to one or more of claims 1 to 3, **characterized in that** the small-pore zeolite is an aluminosilicate and belongs to the structure type AEI, CHA (chabazite), ERI (erionite), LEV (levyne), AFX, DDR, or KFI.

5. SCR-active material according to claim 4, **characterized in that** the small-pore zeolite has an SAR value of 5 to 50.

6. SCR-active material according to one or more of claims 1 to 3, **characterized in that** the small-pore zeolite is a silicoaluminophosphate or an aluminophosphate and belongs to the structure type AEI, CHA (chabazite), ERI (erionite), LEV (levyne), AFX, DDR, or KFI.

7. SCR-active material according to one or more of claims 1 to 6, **characterized in that** the average crystallite size (d50) of the small-pore zeolite is 0.1 to 20 µm.

8. SCR-active material according to one or more of claims 1 to 7, **characterized in that** it is present in powder form.

9. SCR-active material according to one or more of claims 1 to 10, **characterized in that** it is present in the form of a coating on a carrier substrate or in that it was extruded by means of a matrix component to form a substrate, the carrier substrate being formed in the case of extrusion from an inert matrix component and the SCR-active material.

10. SCR-active material according to one or more of claims 1 to 7, **characterized in that** it is present in the form of a coating suspension comprising
a) an SCR-active material, that comprises
(i) a small-pore zeolite,
(ii) aluminum oxide, and
(iii) copper,
said material containing 5 to 25 wt.% aluminum oxide, based on the total material, and the copper being present on the aluminum oxide in a first concentration and on the small-pore zeolite in a second concentration, and **in that** the total amount of copper, calculated as CuD and based on the total SCR-active material, is 1 to 15 wt.%, and **in that** the first concentration is higher than the second concentration, and **in that** the small-pore zeolite forms a core and the aluminum oxide forms a shell enclosing this core, and
b) water.

11. Method for purifying exhaust gas of lean-operated combustion engines, **characterized in that** the exhaust gas is guided over an SCR-active material according to one or more of claims 1 to 9.

12. Device for purifying exhaust gas of lean-operated combustion engines, **characterized in that** it comprises an SCR-active material according to one or more of claims 1 to 9, as well as a means for providing a reducing agent.

13. Device according to claim 12, **characterized in that** the means for providing a reducing agent is an injector for aqueous urea solution.

14. Device according to any of claims 12 to 13, **characterized in that** it comprises an oxidation catalyst.

15. Device according to claim 12, **characterized in that** the means for providing a reducing agent is a nitrogen oxide storage catalyst.

16. Method for producing the SCR-active material according to one or more of claims 1 to 8, **characterized in that** a small-pore zeolite is placed in water, a soluble copper salt is added while stirring, and the aluminum oxide or a corresponding aluminum oxide precursor is subsequently added.

17. Method according to claim 16, **characterized in that** the suspension, which is obtained by placing the small-pore zeolite in water, by the addition of a soluble copper salt while stirring and by the subsequent addition of the aluminum oxide or a corresponding aluminum oxide precursor, is subsequently filtered and/or dried.

18. Method according to claim 17, **characterized in that** the drying is spray drying.

19. Method according to claim 17 and/or 18, **characterized in that** the calcination takes place in air or in an air/water atmosphere at temperatures between 500°C and 900°C.

## Revendications

1. Matériau actif SCR qui comprend
i. une zéolithe à petits pores,
ii. de l'oxyde d'aluminium et
iii. du cuivre,
**caractérisé en ce qu'**il contient, par rapport à la totalité du matériau, 5 à 25 % en poids d'oxyde d'aluminium et le cuivre se trouve, par rapport à l'oxyde d'aluminium, en une première concentration et, par rapport à la zéolithe à petits pores, en une deuxième concentration et **en ce que** la quantité totale de cuivre, exprimée sous forme de CuO et par rapport à la totalité du matériau actif SCR, est de 1 à 15 % en poids et **en ce que** la première concentration est supérieure à la deuxième concentration et **en ce que** la zéolithe à petits pores forme un noyau et l'oxyde d'aluminium forme une enveloppe entourant ce noyau.

2. Matériau actif SCR selon la revendication 1, **caractérisé en ce que** la première concentration est supérieure d'au moins 1,5 fois à la deuxième concentration.

3. Matériau actif SCR selon la revendication 1 et/ou 2,
**caractérisé en ce que** le rapport atomique du cuivre échangé dans la zéolithe à l'aluminium de structure dans la zéolithe est de 0,25-0,6.

4. Matériau actif SCR selon l'une ou plusieurs des revendications 1 à 3, **caractérisé en ce que** la zéolithe à petits pores est un aluminosilicate et appartient au type de structure AEI, CHA (chabazite), ERI (érionite), LEV (lévyne), AFX, DDR ou KFI.

5. Matériau actif SCR selon la revendication 4, **caractérisé en ce que** la zéolithe à petits pores présente une valeur du SAR de 5 à 50.

6. Matériau actif SCR selon l'une ou plusieurs des revendications 1 à 3, **caractérisé en ce que** la zéolithe à petits pores est un silicoaluminophosphate ou un aluminophosphate et appartient au type de structure AEI, CHA (chabazite), ERI (érionite), LEV (lévyne), AFX, DDR ou KFI.

7. Matériau actif SCR selon l'une ou plusieurs des revendications 1 à 6, **caractérisé en ce que** la grosseur moyenne des cristaux (d50) de la zéolithe à petits pores est de 0,1 à 20 µm.

8. Matériau actif SCR selon l'une ou plusieurs des revendications 1 à 7, **caractérisé en ce qu'**il se trouve sous forme de poudre.

9. Matériau actif SCR selon l'une ou plusieurs des revendications 1 à 10, **caractérisé en ce qu'**il se trouve sous forme d'un revêtement sur un substrat support ou **en ce qu'**il a été extrudé au moyen d'un composant de matrice en un substrat, le substrat support étant formé, dans le cas de l'extrusion, à partir d'un composant de matrice inerte et du matériau actif SCR.

10. Matériau actif SCR selon l'une ou plusieurs des revendications 1 à 7, **caractérisé en ce qu'**il se trouve sous forme d'une suspension de revêtement, qui comprend
a) un matériau actif SCR, qui comprend
(i) une zéolithe à petits pores,
(ii) de l'oxyde d'aluminium et
(iii) du cuivre,
contenant, par rapport à la totalité du matériau, 5 à 25 % en poids d'oxyde d'aluminium et le cuivre se trouvant, par rapport à l'oxyde d'aluminium, en une première concentration et, par rapport à la zéolithe à petits pores, en une deuxième concentration et **en ce que** la quantité totale de cuivre, exprimée sous forme de CuO et par rapport à la totalité du matériau actif en tant que SCR, est de 1 à 15 % en poids et **en ce que** la première concentration est supérieure à la deuxième concentration et **en ce que** la zéolithe à petits pores forme un noyau et l'oxyde d'aluminium forme une enveloppe entourant ce noyau et
b) de l'eau.

11. Procédé de purification de gaz d'échappement de moteurs à combustion interne à mélange pauvre, **caractérisé en ce que** le gaz d'échappement est guidé sur un matériau actif SCR selon l'une ou plusieurs des revendications 1 à 9.

12. Dispositif pour la purification de gaz d'échappement de moteurs à combustion interne à mélange pauvre, **caractérisé en ce qu'**il comprend un matériau actif SCR selon l'une ou plusieurs des revendications 1 à 9 ainsi qu'un moyen destiné à la mise à disposition d'un agent de réduction.

13. Dispositif selon la revendication 12, **caractérisé en ce que** le moyen destiné à la mise à disposition d'un agent de réduction est un injecteur pour une solution aqueuse d'urée.

14. Dispositif selon l'une quelconque des revendications 12 à 13, **caractérisé en ce qu'**il comprend un catalyseur d'oxydation.

15. Dispositif selon la revendication 12, **caractérisé en ce que** le moyen destiné à la mise à disposition d'un agent de réduction est un catalyseur d'accumulation d'oxyde d'azote.

16. Procédé pour la préparation du matériau actif SCR selon l'une ou plusieurs des revendications 1 à 8, **caractérisé en ce qu'**une zéolithe à petits pores est disposée au préalable dans de l'eau, un sel soluble de cuivre est ajouté sous agitation et ensuite, l'oxyde d'aluminium ou un précurseur correspondant d'oxyde d'aluminium est ajouté.

17. Procédé selon la revendication 16, **caractérisé en ce que** la suspension obtenue après la disposition au préalable de la zéolithe à petits pores dans de l'eau, l'ajout sous agitation d'un sel soluble de cuivre et l'ajout consécutif d'oxyde d'aluminium ou d'un précurseur correspondant d'oxyde d'aluminium est ensuite filtrée et/ou séchée.

18. Procédé selon la revendication 17, **caractérisé en ce qu'**il s'agit, pour le séchage, d'un séchage par pulvérisation.

19. Procédé selon la revendication 17 et/ou 18, **caractérisé en ce que** la calcination a lieu dans l'air ou dans une atmosphère air/eau à des températures entre 500 °C et 900 °C.
